(19) Europäisches Patentamt

European Patent Office

Office européen des brevets

(11) **EP 2 247 554 B1**

(12) **EUROPEAN PATENT SPECIFICATION**

(45) Date of publication and mention
of the grant of the patent:
**25.01.2012 Bulletin 2012/04**

(51) Int Cl.:
*C04B 35/195* (2006.01)  *C04B 35/478* (2006.01)
*C04B 38/00* (2006.01)

(21) Application number: **09714822.5**

(86) International application number:
**PCT/US2009/001188**

(22) Date of filing: **26.02.2009**

(87) International publication number:
**WO 2009/108312 (03.09.2009 Gazette 2009/36)**

(54) **METHOD OF INCREASING CERAMIC PASTE STIFFENING/ GELATION TEMPERATURE BY USING A SALT AND PRECURSOR BATCH**

VERFAHREN ZUR ERHÖHUNG DER VERSTEIFUNGS-/GELIERUNGSTEMPERATUR VON KERAMIKPASTE DURCH VERWENDUNG EINES SALZES UND VORLÄUFERCHARGE

PROCÉDÉ D AUGMENTATION DE LA TEMPÉRATURE DE DURCISSEMENT/GÉLIFICATION D UNE PÂTE DE CÉRAMIQUE À L AIDE D UNE CHARGE DE SEL ET DE PRÉCURSEUR

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **28.02.2008  US 72791**

(43) Date of publication of application:
**10.11.2010  Bulletin 2010/45**

(73) Proprietor: **Corning Incorporated**
**Corning, NY 14831 (US)**

(72) Inventors:
• **DASHER, David**
**Corning**
**NY 14830 (US)**
• **DEROSA, Michael, E.**
**Painted Post**
**NY 14870 (US)**

(74) Representative: **Sturm, Christoph**
**Quermann Sturm Weilnau**
**Patentanwälte**
**Unter den Eichen 7**
**65195 Wiesbaden (DE)**

(56) References cited:
**EP-A- 0 714 867      WO-A-01/71732**
**DE-A1- 4 317 001     US-A- 3 617 321**
**US-A- 4 551 295**

• **SARKAR N ET AL: "Hydration-dehydration properties of methylcellulose and hydroxypropylmethylcellulose" CARBOHYDRATE POLYMERS, APPLIED SCIENCE PUBLISHERS, LTD. BARKING, GB, vol. 27, no. 3, 1 January 1995 (1995-01-01), pages 177-185, XP004034434 ISSN: 0144-8617**

## Description

### FIELD

The present invention relates generally to methods of extruding ceramic precursor batch compositions and batch compositions, and particularly to ceramic precursor batch compositions and batches for forming ceramic honeycombs.

### BACKGROUND

Diesel filter products are in strong demand and in response to this growing demand, there is a need to increase the extrusion feedrate of ceramic precursor batch compositions, particularly cordierite and aluminum titanate based compositions. However, the feedrate is limited due to the low temperature at which the rheological behavior of the ceramic paste begins to change. The batch begins to change its rheological properties mainly because the hydroxypropyl methylcellulose (HPMC) binder undergoes phase separation and subsequently gelation at a specific temperature. These changes can lead to differential flow behavior between the core and skin of the ware due to radial temperature gradients caused by shear induced heating of the paste. In the most extreme case, when the temperature becomes much higher than the binder transition temperature, the paste viscosity can increase to the point where it can cause the extruder torque and die pressure to reach their maximum limits.

In the past the batch stiffening temperature of ceramic compositions has been increased by using hydroxypropyl methylcellulose binders that have higher hydroxypropyl substitution levels as are found in "K-type" binders. F-type and K-type binders have even been blended to increase the batch stiffening temperature. Until now, blending binders with different substitution chemistry has been the only materials-based approach used to increase the batch stiffening temperature. However using a K-type binder alone can cause other problems such as poor wet and knit strength during extrusion as well as blister formation on the skin during drying.

US-A-4551 295 discloses a method for making a honeycomb structure consisting of a cordierite or cordierite-mullite composition which comprises the steps of: providing a batch consisting of a mixture of particulate ceramic material, water, a hydroxypropyl cellulose having a viscosity at 20 °C in a 2% aqueous solution between 25,000-100,000 centipoises and an extrusion aid; charging said batch into a self-cleaning, intermeshing, ad co-rotating twin screw extrusion apparatus; operating said extrusion apparatus at working temperatures greater than 35 °C to knead, mix, de-air, and convey said patch; and then passing said batch through a die to produce a honeycomb structure

Therefore, there is a need for an alternative materials solution that will increase the stiffening temperature of our ceramic pastes and, as a result, increase extrusion feedrates.

### SUMMARY

One aspect of the invention is a method of producing a ceramic honeycomb body, comprising the steps of providing inorganic ceramic-forming ingredients, adding a cellulose-based binder, an aqueous-based solvent, and a chaotropic agent to the inorganic ceramic-forming ingredients, mixing the inorganic ceramic-forming ingredients, the binder, the solvent, and the chaotropic agent to form a precursor batch, forming the precursor batch into a green honeycomb body and firing the green honeycomb body to produce a ceramic honeycomb body. The chaotropic agent may be $NaI$, $KI$, $RbI$, $MgI_2$, $ZnI_2$, $PtI_4$, ammonium iodide, tetramethylammonium iodide, tetraethylammonium iodide, tetrapropylammonium iodide, $NaSCN$, $Mg(SCN)_2$, $Ca(SCN)_2$, $Al(SCN)_2$, ammonium thiocyanate, guanidinium thiocyanate or mixtures thereof.

In another aspect, the present invention includes a method for increasing a rate of extrusion of a ceramic precursor batch composition, comprising the steps of providing inorganic ceramic-forming ingredients, adding a cellulose-based binder, an aqueous-based solvent, and a chaotropic agent to the inorganic ceramic-forming ingredients, where the chaotropic agent may be $NaI$, $KI$, $RbI$, $MgI_2$, $ZnI_2$, $PtI_4$, ammonium iodide, tetramethylammonium iodide, tetraethylammonium iodide, tetrapropylammonium iodide, $NaSCN$, $Mg(SCN)_2$, $Ca(SCN)_2$, $Al(SCN)_2$, ammonium thiocyanate, guanidinium thiocyanate, or mixtures thereof.

In a further aspect, the present invention includes a ceramic precursor batch composition, comprising inorganic ceramic-forming ingredients, a cellulose-based binder, an aqueous-based solvent and a chaotropic agent, where the chaotropic agent may be $NaI$, $NaB(C_6H_5)_4$, $KI$, $KB(C_6H_5)_4$, $RbI$, $MgI_2$, $ZnI_2$, $PtI_4$, ammonium iodide, tetramethylammonium iodide, tetraethylammonium iodide, tetrapropylammonium iodide, $NaSCN$, $Mg(SCN)_2$, $Ca(SCN)_2$, $Al(SCN)_2$, ammonium thiocyanate, guanidinium thiocyanate, or mixtures thereof.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description present embodiments of the invention, and are intended to provide an overview or framework for understanding the nature and character of the invention as it is claimed. The accompanying drawings are included to provide a further understanding of the invention, and are incorporated into and constitute a part of this specification. The drawings illustrate various embodiments of the invention, and together with the description serve to explain the principles and operations of the invention.

## BRIEF DESCRIPTION OF THE DRAWINGS

Figure 1 is a graph showing the effect of temperature on extrusion pressure, according to one embodiment of the present invention;

Figure 2 is a graph showing the effect temperature has on the extrusion pressure of an aluminum-titanate containing batch composition in the absence and presence of potassium iodide;

Figure 3 is a graph showing the effect temperature has on the extrusion pressure of an aluminum-titanate containing batch composition in the absence and presence of tetraethylammonium iodide; and

Figure 4 is a graph showing the effect of the specific mixing energy on the batch stiffening temperature of an aluminum-titanate containing batch composition in the presence of potassium iodide or tetraethylammonium iodide.

## DETAILED DESCRIPTION

Broadly, the present invention provides a ceramic precursor batch composition with a higher stiffening onset temperature, allowing for greater extrusion federates without significant increases in pressure. The composition may comprise inorganic ceramic-forming ingredients, a cellulose-based binder, an aqueous solvent such as, but not limited to, water and a chaotropic agent. The chaotropic agent may be $NaI$, $KI$, $RbI$, $MgI_2$, $ZnI_2$, $PtI_4$, ammonium iodide, tetram-ethylammonium iodide, tetraethylammonium iodide, tetrapropylammonium iodide, $NaSCN$, $Mg(SCN)_2$, $Ca(SCN)_2$, $Al(SCN)_2$, ammonium thiocyanate, guanidinium thiocyanate, or mixtures thereof. There is also provided a method of producing a ceramic honeycomb body comprising using the ceramic precursor batch composition of the present invention.

The ceramic precursor batch composition of the present invention comprises at least one chaotropic agent to provide a batch composition that has a higher stiffening onset temperature, a lower pressure during extrusion and a greater feedrate than the ceramic precursor batch compositions of the prior art that do not comprise a chaotropic agent. The chaotropic agent may be an inorganic or organic salt. While not wishing to be bound by theory, the effect of the chaotropic agent may be due to how well water associates or bonds with the salt ions. The chaotropic agent may be a salt comprising ions with low charge density. Ions with low charge density (low charge number and large ionic radius) may attract water to a lesser degree and act like hydrophobic molecules that prevent cellulose-based binder from aggregating and precipitating out of solution. These types of ions delay the gelation of water soluble phase transitioning polymers like cellulose-based binders until higher temperatures in a process called "salting-in". The result is a ceramic precursor batch composition with a higher stiffening onset temperature. In contrast, ions with high charge density, (high charge number and small ionic radius) attract water strongly and depress the gel point of cellulose-based binders by forcing the phase separation to take place at a lower temperature in a process referred to as "salting-out".

The process of salting-in and salting-out of water soluble polymers such as proteins was reported in 1888 by Hofmeister and is referred to as the Hofmeister effect. The Hofmeister series of anions lists the relative salt strength each anion has on the solubility of water soluble polymers. A partial list of the anion series is shown below. Salts of the anions to the left side of the series are "salt-out" salts that would reduce the gel temperature of cellulose-based binders.

$Citrate^{3-} \approx PO_4^{3-} > SO_4^{2-} = tartrate^{2-} > HPO_4^{2-} > acetate^- > Cl^- > Br^- > NO_3^- > ClO_4^- > I^- > SCN^-$

*Hofmeister anion series*

Salts of the anions toward the right side of the series are "salt-in" salts and would raise the gel temperature of polymers such as cellulose-based binders. The chaotropic agent may therefore comprise the salts toward the right side of the Hofmeister anion series.

Although the anions have a stronger influence on the batch stiffening temperature of the ceramic precursor batch composition, cations may also influence the batch stiffening temperature. Therefore care should be taken in selecting the cations of the chaotropic agent. Since water will also bond to positively charged ions, there is also a Hofmeister series for cations. A partial list of the Hofmeister cation series is shown below.

$N(CH_3)_4^+ > NH_4^+ > Cs^+ > Rb^+ > K^+ > Na^+ > H^+ > Ca^{2+} > Mg^{2+} > Al^{3+}$

*Hofmeister cation series*

Salts of the cations to the left of this series are salt-in salts and would help raise the gel point of cellulose-based binders while salts of the cations to the right side of this series are salt-out salts and would help decrease the gel point of cellulose-based binders. Both the cation and anion series can be used to choose the best performing salt or chaotropic agent that will help increase the gel point of cellulose-based binders. The anions may be chosen from the right side of the Hofmeister anion series whereas the cation may be chosen from the left side of the Hofmeister cation series.

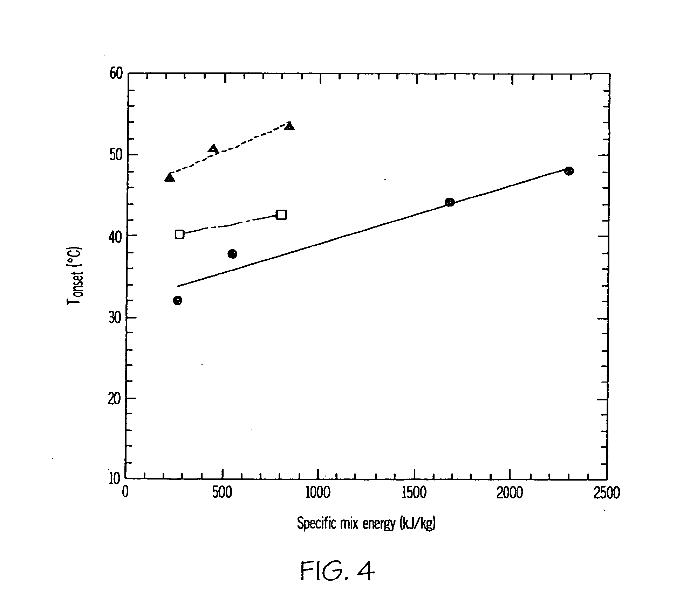

In one embodiment, the chaotropic agent may be NaI, KI, RbI, $MgI_2$, $ZnI_2$, $PtI_4$, ammonium iodide, tetramethylammonium iodide, tetraethylammonium iodide, tetrapropylammonium iodide, NaSCN, $Mg(SCN)_2$, $Ca(SCN)_2$, $Al(SCN)_2$, ammonium thiocyanate, guanidinium thiocyanate, or mixtures thereof. In an illustrative embodiment, the chaotropic agent may be ammonium iodide, tetramethylammonium iodide, tetraethylammonium iodide, tetrapropylammonium iodide or mixtures thereof. The quaternary ammonium iodide salts or organic iodide salts are more effective at increasing the batch stiffening temperature than the metal iodide salts as illustrated in Figure 4.

The chaotropic agent may be introduced to a concentration level of from about 0.05 molal to about 1.5 molal. In an exemplary embodiment, the chaotropic agent has a molality of from about 0.1 molal to about 1.0 molal. The molality concentration of the chaotropic agent is the moles of chaotropic agent per kg of aqueous solvent. In an alternate exemplary embodiment, the chaotropic agent may be saturating, that is, it may be present in concentrations up to the solubility limit of the chaotropic agent. The amount of chaotropic agent in the ceramic precursor batch composition will depend on the composition itself, the method of forming a green body and/or the desired batch stiffening temperature. It is within the skill of those in the art to determine the optimal amount of chaotropic agent required without undue experimentation.

The inorganic ceramic-forming ingredients may be cordierite, mullite, clay, talc, zircon, zirconia, spinel, aluminas and their precursors, silicas and their precursors, silicates, aluminates, lithium aluminosilicates, feldspar, titania, fused silica, nitrides, carbides, borides, e.g., silicon carbide, silicon nitride, soda lime, aluminosilicate, borosilicate, soda barium borosilicate or combinations of these, as well as others. Combinations of these materials may be physical or chemical combinations, for example, mixtures or composites, respectively.

In one exemplary embodiment, the inorganic ceramic-forming ingredients may yield an aluminum-titanate ceramic material upon firing. In another exemplary embodiment, the inorganic ceramic-forming ingredients may be those that yield cordierite, mullite, or mixtures of these on firing, some examples of such mixtures being about 2% to about 60% mullite, and about 30% to about 97% cordierite, with allowance for other phases, typically up to about 10% by weight. Some ceramic batch material compositions for forming cordierite that are especially suited to the practice of the present invention are those disclosed in U.S. Pat. No. 3,885,977 which is herein incorporated by reference as filed.

One composition, by way of a non-limiting example, which ultimately forms cordierite upon firing may be as follows in percent by weight, although it is to be understood that the invention is not limited to such: about 33-41, and most preferably about 34-40 of aluminum oxide, about 46-53 and most preferably about 48-52 of silica, and about 11-17 and most preferably about 12-16 magnesium oxide.

In the practice of the present invention, the ceramic precursor batch composition comprising the chaotropic agent and an inorganic powder component consisting of a sinterable inorganic particulate material, e.g., a ceramic powder material, may be prepared by using the components in any desired amounts selected.

The inorganic ceramic-forming ingredients may be synthetically produced materials such as oxides, hydroxides, etc., or they may be naturally occurring minerals such as clays, talcs, or any combination of these. The invention is not limited to the types of powders or raw materials. These may be chosen depending on the properties desired in the ceramic body.

The cellulose-based binder may be, but not limited to, methylcellulose, ethylhydroxy ethylcellulose, hydroxybutyl methylcellulose, hydroxymethylcellulose, hydroxypropyl methylcellulose, hydroxyethyl methylcellulose, hydroxybutylcellulose, hydroxyethylcellulose, hydroxypropylcellulose, sodium carboxymethylcellulose, and mixtures thereof. Methylcellulose and/or methylcellulose derivatives may be especially suited as organic binders in the practice of the present invention with methylcellulose, hydroxypropyl methylcellulose, or combinations of these being preferred. Preferred sources of cellulose ethers are Methocel A4M, F4M and F240 cellulose products from Dow Chemical Co. Methocel A4M cellulose is a methylcellulose while Methocel F4M, F240, and K75M cellulose products are hydroxypropyl methylcellulose.

The properties of preferred cellulose-based binders such as methylcellulose may be water retention, water solubility, surface activity or wetting ability, thickening of the mixture, providing wet and dry green strength to the green bodies, thermal gelation and hydrophobic association in an aqueous environment. Cellulose ether binders that promote hydrogen bonding interaction with the solvent may be desirable. Non-limiting examples of substituent groups that maximize the hydrogen bonding interaction with polar solvents e.g. water, may be hydroxypropyl and hydroxyethyl groups, and to a smaller extent hydroxybutyl groups.

The hydrophobically modified cellulose ether binder may makes up, as a superaddition, typically about 1-10% by weight, and more typically about 2-6% by weight of the inorganic ceramic-forming material.

The solvent may provide a medium for the binder to dissolve in thus providing plasticity to the ceramic precursor batch and wetting of the powders. The solvent may be aqueous based such as, but not limited to, water or water-miscible solvents. Most useful may be aqueous based solvents which provide hydration of the binder and powder particles. Typically, the amount of aqueous solvent may be from about 20% by weight to about 50% by weight. The chaotropic agent may reduce the viscosity of the ceramic precursor batch. Therefore it may be desirable to reduce the amount of aqueous solvent by, for example, about 1-2% by weight to give a ceramic precursor batch having the same viscosity or stiffness as compositions without the chaotropic agent but having a higher batch stiffening temperature. The lower amount of aqueous solvent may allow for faster drying of a green body formed from the ceramic precursor batch.

The ceramic precursor batch composition of the present invention may further comprise other additives such as surfactants, oil lubricants and pore-forming material. Non-limiting examples of surfactants that may be used in the practice of the present invention are $C_8$ to $C_{22}$ fatty acids and/or their derivatives. Additional surfactant components that may be used with these fatty acids are $C_8$ to $C_{22}$ fatty esters, $C_8$ to $C_{22}$ fatty alcohols, and combinations of these. Exemplary surfactants are stearic, lauric, oleic, linoleic, palmitoleic acids, and their derivatives, stearic acid in combination with ammonium lauryl sulfate, and combinations of all of these. In an illustrative embodiment, the surfactant may be lauric acid, stearic acid, oleic acid, and combinations of these. The amount of surfactants typically may be from about 0.5% by weight to about 2% by weight.

Non-limiting examples of oil lubricants may be light mineral oil, corn oil, high molecular weight polybutenes, polyol esters, a blend of light mineral oil and wax emulsion, a blend of paraffin wax in corn oil, and combinations of these. Typically, the amount of oil lubricants may be from about 1% by weight to about 10% by weight. In an exemplary embodiment, the oil lubricants may be present from about 3% by weight to about 6% by weight.

In filter applications, such as in diesel particulate filters, it may be desirable to include a pore forming material in the mixture in an amount effective to subsequently obtain the porosity required for efficient filtering. A pore forming material is any particulate substance (not a binder) that burns out of the green body in the firing step. Some types of pore forming materials that may be used, although it is to be understood that the invention is not limited to these, are non-waxy organics that are solid at room temperature, elemental carbon, and combinations of these. Some examples may be graphite, starch, cellulose, flour, etc. In one exemplary embodiment, the pore forming material may be elemental carbon. In another exemplary embodiment, the pore forming material may be graphite, which may have the least adverse effect on the processing. In an extrusion process, for example, the rheology of the mixture may be good when graphite is used. The pore forming material may be up to about 60% by weight as a superaddition. Typically, the amount of graphite may be from about 10% to about 30%, and more typically about 15% to about 30% by weight based on the inorganic ceramic-forming ingredients. If a combination of graphite and flour are used, the amount of pore forming material may be typically from about 10% by weight to about 25% by weight with the graphite at 5% by weight to 10% of each and the flour at 5% by weight to about 10% by weight.

The present invention also provides a method of producing a ceramic honeycomb body, comprising the steps of providing inorganic ceramic-forming ingredients and adding a cellulose-based binder, an aqueous based solvent and a chaotropic agent to the inorganic ceramic-forming ingredients. The chaotropic agent may be NaI, KI, RbI, $MgI_2$, $ZnI_2$, $PtI_4$, ammonium iodide, tetramethylammonium iodide, tetraethylammonium iodide, tetrapropylammonium iodide, NaSCN, $Mg(SCN)_2$, $Ca(SCN)_2$, $Al(SCN)_2$, ammonium thiocyanate, guanidinium thiocyanate, or mixtures thereof. The inorganic ceramic-forming ingredients, the binder, the solvent and the chaotropic agent are then mixed to form a precursor batch. The inorganic materials, binder, solvent and chaotropic agent may be mixed in a muller or plow blade mixer. The solvent may be added in an amount that is less than is needed to plasticize the batch. With water as the solvent, the water hydrates the binder and the powder particles. The surfactant and/or oil lubricant, if desired, may then be added to the mix to wet out the binder and powder particles.

The precursor batch may then be plasticized by shearing the wet mix formed above in any suitable mixer in which the batch will be plasticized, such as, but not limited to, a twinscrew extruder/mixer, auger mixer, muller mixer, or double arm, etc. Extent of plasticization is dependent on the concentration of the components (binder, solvent, chaotropic agent, surfactant, oil lubricant and the inorganics), temperature of the components, the amount of work put in to the batch, the shear rate, and extrusion velocity. During plasticization, the binder dissolves in the solvent and a high viscosity fluid phase is formed. The binder formed is stiff because the system is very solvent-deficient. The surfactant enables the binder phase to adhere to the powder particles.

In a further step, the composition may be extruded to form a green honeycomb body. Extrusion may be done with devices that provide low to moderate shear. For example hydraulic ram extrusion press or two stage de-airing single auger are low shear devices. A single screw extruder is a moderate shear device. The extrusion may be vertical or horizontal. The presence of the chaotropic agent in the ceramic precursor batch composition may produce a composition with lower viscosity and/or a greater batch stiffening temperature, resulting a increased rate of extrusion (feedrate) as compared to batch compositions without the chaotropic agent.

It will be appreciated that the bodies of this invention may have any convenient size and shape and the invention is applicable to all processes in which plastic powder mixtures are shaped. The process may be especially suited to production of cellular monolith bodies such as honeycombs. Cellular bodies find use in a number of applications such as catalytic, adsorption, electrically heated catalysts, filters such as diesel particulate filters, molten metal filters, regenerator cores, etc.

Generally honeycomb densities range from about 235 cells/cm$^2$ (1500 cells/in$^2$) to about 15 cells/cm$^2$ (100 cells/in$^2$). Examples of honeycombs produced by the process of the present invention, although it is to be understood that the invention is not limited to such, may be those having about 94 cells/cm$^2$ (about 600 cells/in$^2$), or about 62 cells/cm$^2$ (about 400 cells/in$^2$) each having wall thicknesses of about 0.1 mm (4 mils). Typical wall thicknesses may be from about 0.07 to about 0.6 mm (about 3 to about 25 mils), although thicknesses of about 0.02-0.048 mm (1-2 mils) are possible with better equipment. The method may be especially suited for extruding thin wall/high cell density honeycombs.

The extrudates may then be dried and fired according to known techniques. The addition of the chaotropic agent may be require that less solvent be used, aiding in the drying and firing of the green body. The firing conditions of temperature and time may depend on the composition and size and geometry of the body, and the invention is not limited to specific firing temperatures and times. For example, in compositions which are primarily for forming cordierite, the temperatures may typically be from about 1300 °C to about 1450 °C, and the holding times at these temperatures may be from about 1 hour to about 6 hours. For mixtures that are primarily for forming mullite, the temperatures may be from about 1400 °C to about 1600 °C, and the holding times at these temperatures may be from about 1 hour to about 6 hours. For cordierite-mullite forming mixtures which yield the previously described cordierite-mullite compositions, the temperatures may be from about 1375 °C to about 1425 °C. Firing times depend on factors such as kinds and amounts of materials and nature of equipment but typical total firing times may be from about 20 hours to about 80 hours. For metal bodies, the temperatures may be about 1000 °C to 1400 °C in a reducing atmosphere preferably hydrogen. Firing times depend on factors as discussed above but may be typically at least 2 hours and typically about 4 hours. For zeolite bodies, the temperatures may be about 400 °C to 1000 °C in air. Firing times depend on factors as discussed above but may be typically about 4 hours.

## Examples

The invention will be further clarified by the following examples.

EXAMPLE 1

*Effect of potassium iodide on T$_{onset}$.* An aluminum titanate containing ceramic paste was prepared with and without the addition of potassium iodide. A level of 2.86% superaddition of potassium iodide based on the weight of inorganics plus poreformer was added as a solid material with the other dry components and mixed in a standard procedure using a plow blade mixer. The liquids (water and tall oil) were added to the dry batch and all components were mixed for several minutes to disperse the materials. Both the control and batch with salt contained a water level of 15.5% and F-Methocel level of 4.5% superaddition based on inorganics plus poreformer. The salt concentration at this water level equated to 1.1 m (moles salt/kg water). The composition of the aluminum titanate containing ceramic paste with the iodide salt is shown in Table 1.

Table 1. Composition of aluminum titanate containing ceramic paste

|  |  | Material | Weight Percent | Weight |
|---|---|---|---|---|
| **INORGANICS** |  |  |  |  |
|  |  | Silica | 10.19 | 129.53 |
|  |  | Strontium Carbonate | 8 | 101.69 |
|  |  | Calcium Carbonate | 1.38 | 17.54 |
|  |  | Alumina | 46.57 | 591.99 |
|  |  | Titanium Dioxide | 29.95 | 380.72 |
|  |  | Hydrated Alumina | 3.71 | 47.16 |
|  |  | Lanthanum Oxide | .2 | 2.54 |
|  | Totals |  | 100 | 1271.19 |
| **PORE FORMERS** |  |  |  |  |
|  |  | Potato Starch | 8 | 101.69 |

(continued)

|  | Material | Weight Percent | Weight |
|---|---|---|---|
|  | Graphite | 10 | 127.12 |
| Totals |  | 118 | 1500.00 |
| **SOLID BINDERS/ORGANICS** | **Process All** ( min) |  |  |
|  | Potassium iodide or Tetraethylammonium iodide | 2.86 2.39 | 42.90 35.85 |
|  | Hydroxypropyl methylcellulose | 4.5 | 67.50 |
| Totals |  | 125.36 | 1610.40 |
| **LIQUID ADDITIONS DURING DRY BLENDING** | **Process All** ( min) |  |  |
| Totals |  | 125.36 | 1610.40 |
| **OTHER LIQUID ADDITIONS** | **Process All** ( min) |  |  |
| Multiplier = 1 | Fatty Acid oil | 1 | 15.00 |
| Totals |  | 126.36 | 1625.40 |
|  |  |  |  |
|  | **Grand Total** | 126.36 | 1625.40 |

After blending all the solid and liquid materials, 500g of the damp powder batch was plasticized in a Brabender mixer for a specified amount of time. This stage of sample preparation converts the powder into a plasticized paste that can be extruded. The paste was removed from the Brabender and loaded into a small ram where the barrel was sealed under vacuum to remove air and then spaghettied two times. After the spaghetti and de-airing steps, the batch was extruded into rods 1ft long and 13 mm in diameter so that they could be directly loaded into a capillary rheometer for temperature sweep tests to measure the stiffening temperature of the paste.

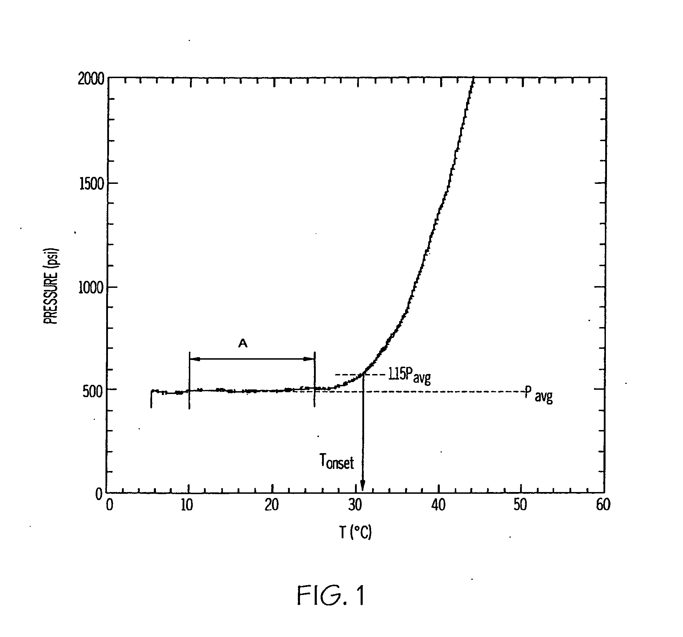

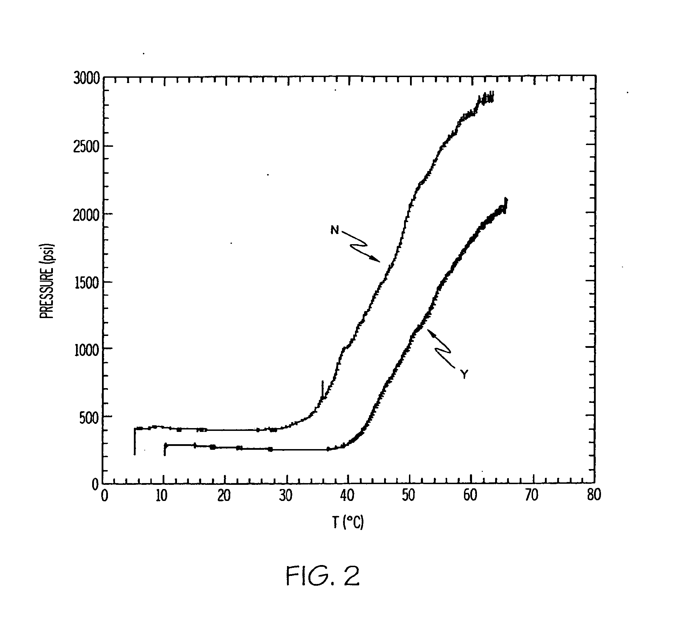

The batch stiffening temperature ($T_{onset}$) of the control (no salt) and composition with potassium iodide was measured using a dual barrel temperature sweep method. $T_{onset}$ was defined as the temperature at which the capillary pressure increases by 15% above the stable baseline pressure during extrusion through a zero length capillary die. At this temperature the binder begins to undergo its thermal phase transition and the pressure begins to increase sharply. Figure 1 shows an example of a typical temperature ramp experiment including average pressure over 15°C window ("A"). Figure 2 shows temperature sweep data for an aluminum titanate containing ceramic paste batch with 1.1 M potassium iodide at 2.86% superaddition ("Y") and without potassium iodide salt ("N") at similar Brabender mixing times. The data in Figure 2 shows that the $T_{onset}$ of the batch can be increased by adding potassium iodide to the composition.

EXAMPLE 2

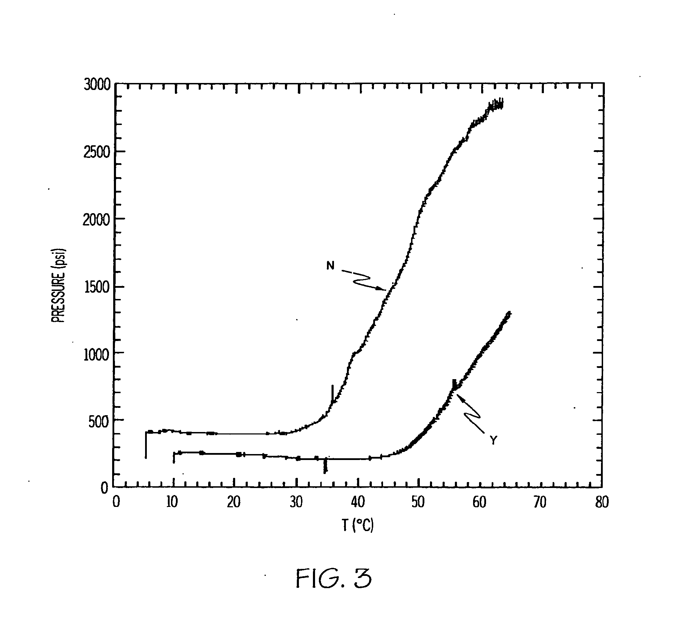

*Effect of tetraethylammonium iodide (TEAI) on $T_{onset}$.* The effectiveness of an organic iodide salt at raising the aluminum titanate containing ceramic batch stiffening temperature was also tested. An organic salt was used because alkali metals such as sodium and potassium can cause an undesireable increase in CTE of fired ware. Figure 3 shows capillary temperature sweep results of an aluminum titanate containing ceramic paste with a 0.6 m (2.39% superadd.) concentration of tetramethylammonium iodide (TEAI) ("Y") and a control with no salt ("N"). The control and the sample containing TEAI have 4.5% F-Methocel binder, 15.5% water, and were mixed in a Brabender for 10 min. The results show that TEAI is very effective at increasing the $T_{onset}$ of the aluminum titanate containing ceramic paste batch.

EXAMPLE 3

*Comparison of the effect of potassium iodide and tetraethylammonium iododide on $T_{oneset}$.* The effectiveness of the potassium iodide was compared to the TEAI salt. In order to accomplish this, the $T_{onset}$ results should be on similarly prepared samples. Since both the ratio of Methocel to water and mixing energy can both effect the $T_{onset}$, the effect of the iodide salt on $T_{onset}$ was compared to a control at constant MC/water ratio and specific mixing energy. Figure 4 shows a plot of $T_{onset}$ versus specific mixing energy of aluminum titanate containing ceramic paste with and without salt (Control ●, 2.86% KI o, 2.39% TEAI A). The results in Figure 4 showed that both iodide salts increase the

$T_{onset}$ above that of the control when all samples were prepared at a constant MC/water ratio and compared at similar specific mixing energies.

Using Figure 4 the $T_{onset}$ of each salt was calculated at 140kJ/kg. Once the $T_{onset}$ at 140kJ/kg was determined for each sample, the salt strength of each salt was calculated using the equation:

$$(T_{onset} \text{ of the salt sample} - T_{onset} \text{ of the control})/ \text{ salt molal concentration.}$$

The calculated salt strength of potassium iodide was 6.1 °C/m and that of TEAI was 23.5°C/m. The salt strength of TEAI is nearly 4 times higher than that of potassium iodide. This is in qualitative agreement with the Hofmeister series of cations in which large diffuse cations such as tetraethylemmonium should act as a more hydrophobic additive than potassium.

It will be apparent to those skilled in the art that various modifications and variations can be made to the present invention.

**Claims**

1. A method of producing a ceramic honeycomb body, comprising the steps of:

   providing inorganic ceramic-forming ingredients;
   adding a cellulose-based binder, an aqueous-based solvent, and a chaotropic agent to the inorganic ceramic-forming ingredients, wherein the chaotropic agent is NaI, KI, RbI, $MgI_2$, $ZnI_2$, $PtI_4$, ammonium iodide, tetramethylammonium iodide, tetraethylammonium iodide, tetrapropylammonium iodide, NaSCN, $Mg(SCN)_2$, $Ca(SCN)_2$, $Al(SCN)_2$, ammonium thiocyanate, guanidinium thiocyanate, or mixtures thereof;
   mixing the inorganic ceramic-forming ingredients, the binder, the solvent, and the chaotropic agent to form a precursor batch;
   forming the precursor batch into a green honeycomb body; and
   firing the green honeycomb body to produce a ceramic honeycomb body.

2. The method of claim 1 wherein the chaotropic agent is ammonium iodide, tetramethylammonium iodide, tetraethylammonium iodide, tetrapropylammonium iodide or mixtures thereof.

3. The method of claim 1 wherein a concentration of the chaotropic agent is from 0.05 molal to 1.5 molal.

4. The method of claim 1 wherein the amount of chaotropic agent is at the solubility limit of the agent in the solvent.

5. The method of claim 1 wherein the cellulose-based binder comprises methylcellulose, ethylhydroxy ethylcellulose, hydroxybutyl methylcellulose, hydroxymethylcellulose, hydroxypropyl methylcellulose, hydroxyethyl methylcellulose, hydroxybutyl methylcellulose, hydroxyethylcellulose, hydroxypropylcellulose, sodium carboxy methylcellulose or mixtures thereof.

6. The method of claim 1 wherein the ceramic-forming ingredients comprise aluminum-titanate forming ingredients.

7. The method of claim 1 wherein the inorganic ceramic-forming ingredients comprise cordierite forming ingredients.

8. The method of claim 1 further comprising the step of adding up to 60 weight % of a pore forming material to the inorganic ceramic-forming materials wherein the weight % is based on 100% of the inorganic ceramic-forming ingredients.

9. The method of claim 1 wherein the pore forming material is starch or graphite.

10. The method of claim 1 wherein the green honeycomb body is formed by extrusion through an extrusion die.

11. A ceramic precursor batch composition, comprising:

   inorganic ceramic-forming ingredients;

a cellulose-based binder;

an aqueous-based solvent; and

a chaotropic agent, wherein the chaotropic agent is NaI, KI, RbI, $MgI_2$, $ZnI_2$, $PtI_4$, ammonium iodide, tetramethylammonium iodide, tetraethylammonium iodide, tetrapropylammonium iodide, NaSCN, $Mg(SCN)_2$, $Ca(SCN)_2$, $Al(SCN)_2$, ammonium thiocyanate, guanidinium thiocyanate, or mixtures thereof.

12. The ceramic precursor batch composition of claim 11 further comprising a pore forming material, wherein the pore forming material is starch or graphite.

13. The ceramic precursor batch composition of claim 11 wherein the chaotropic agent has a molality of from 0.05 molal to 1.5 molal or up to the solubility limit of the agent in the solvent.

14. The ceramic precursor batch composition of claim 11 wherein the inorganic ceramic-forming material comprises cordierite or aluminum titanate-forming ingredients.

15. The ceramic precursor batch composition of claim 11 wherein the cellulose-based binder comprises methylcellulose, ethylhydroxy ethylcellulose, hydroxybutyl methylcellulose, hydroxymethylcellulose, hydroxypropyl methylcellulose, hydroxylethyl methylcellulose, hydroxybutyl methylcellulose, hydroxyethylcellulose, hydroxypropylcellulose, sodium carboxy methylcellulose or mixtures thereof.

**Patentansprüche**

1. Verfahren zum Herstellen eines Keramikwabenkörpers, umfassend die folgenden Schritte:

Bereitstellen anorganischer, keramikbildender Bestandteile;

Hinzufügen eines auf Cellulose basierenden Bindemittels, eines auf Wasser basierenden Lösungsmittels, eines chaotropen Mittels zu den anorganischen keramikbildenden Bestandteilen, wobei das chaotrope Mittel NaI, KI, RbI, $MgI_2$, $ZnI_2$, $PtI_4$, Ammoniumiodid, Tetramethylammoniumiodid, Tetraethylammoniumiodid, Tetrapropylammoniumiodid, NaSCN, $Mg(SCN)_2$, $Ca(SCN)_2$, $Al(SCN)_2$, Ammoniumthiocyanat, Guanidiniumthiocyanat oder Mischungen davon ist;

Mischen der anorganischen keramikbildenden Bestandteile, des Bindemittels, des Lösungsmittels und des chaotropen Mittels zur Bildung einer Vorläufercharge;

Bilden der Vorläufercharge zu einem Wabengrünkörper; und

Brennen des Wabengrünkörpers zur Herstellung eines Keramikwabenkörpers.

2. Verfahren nach Anspruch 1, wobei das chaotrope Mittel Ammoniumiodid, Tetramethylammoniumiodid, Tetraethylammoniumiodid, Tetrapropylammoniumiodid oder Mischungen davon ist.

3. Verfahren nach Anspruch 1, wobei eine Konzentration des chaotropen Mittels eine Molität von 0,05 bis 1,5 aufweist.

4. Verfahren nach Anspruch 1, wobei die Menge des chaotropen Mittels an der Löslichkeitsgrenze des Mittels in dem Lösungsmittel liegt.

5. Verfahren nach Anspruch 1, wobei das auf Cellulose basierende Bindemittel Methylcellulose, Ethylhydroxyethylcellulose, Hydroxybutylmethylcellulose, Hydroxymethylcellulose, Hydroxypropylmethylcellulose, Hydroxyethylmethylcellulose, Hydroxybutylmethylcellulose, Hydroxyethylcellulose, Hydroxypropylcellulose, Natriumcarboxymethylcellulose oder Mischungen davon umfasst.

6. Verfahren nach Anspruch 1, wobei die keramikbildenden Bestandteile aluminiumtitanatbildende Bestandteile umfassen.

7. Verfahren nach Anspruch 1, wobei die anorganischen keramikbildenden Bestandteile cordieritbildende Bestandteile umfassen.

8. Verfahren nach Anspruch 1, ferner umfassend den Schritt des Hinzufügens von bis zu 60 Gew.-% eines porenbildenden Materials zu den anorganischen keramikbildenden Materialien, wobei die Gewichtsprozentangabe auf 100 % der anorganischen keramikbildenden Bestandteile basiert.

**9.** Verfahren nach Anspruch 1, wobei das porenbildende Material Stärke oder Graphit ist.

**10.** Verfahren nach Anspruch 1, wobei der Wabengrünkörper durch Extrusion durch eine Extrusionsdüse gebildet wird.

**11.** Keramikvorläuferchargenzusammensetzung, umfassend anorganische, keramikbildende Bestandteile; ein auf Cellulose basierendes Bindemittel; ein auf Wasser basierendes Lösungsmittel; und ein chaotropes Mittel, wobei das chaotrope Mittel NaI, KI, RbI, $MgI_2$, $ZnI_2$, $PtI_4$, Ammoniumiodid, Tetramethylammoniumiodid, Tetraethylammoniumiodid, Tetrapropylammoniumiodid, NaSCN, $Mg(SCN)_2$, $Ca(SCN)_2$, $Al(SCN)_2$, Ammoniumthiocyanat, Guanidiniumthiocyanat oder Mischungen davon ist.

**12.** Keramikvorläuferchargenzusammensetzung nach Anspruch 11, ferner umfassend ein porenbildendes Material, wobei das porenbildende Material Stärke oder Graphit ist.

**13.** Keramikvorläuferchargenzusammensetzung nach Anspruch 11, wobei das chaotrope Mittel eine Molalität von 0,05 bis 1,5 oder eine Molalität bis zur Löslichkeitsgrenze des Mittels in dem Lösungsmittel aufweist.

**14.** Keramikvorläuferchargenzusammensetzung nach Anspruch 11, wobei das anorganische keramikbildende Material cordierit- oder aluminiumtitanatbildende Bestandteile umfasst.

**15.** Keramikvorläuferchargenzusammensetzung nach Anspruch 11, wobei das auf Cellulose basierende Bindemittel Methylcellulose, Ethylhydroxyethylcellulose, Hydroxybutylmethylcellulose, Hydroxymethylcellulose, Hydroxypropylmethylcellulose, Hydroxyethylmethylcellulose, Hydroxybutylmethylcellulose, Hydroxyethylcellulose, Hydroxypropylcellulose, Natriumcarboxymethylcellulose oder Mischungen davon umfasst.

**Revendications**

**1.** Procédé de production d'un corps céramique en nid d'abeilles, comprenant les étapes consistant à :

se procurer des ingrédients formant une céramique inorganique ;
ajouter un liant à base de cellulose, un solvant à base aqueuse et un agent chaotropique aux ingrédients formant une céramique inorganique, l'agent chaotropique étant NaI, KI, RbI, $MgI_2$, $ZnI_2$, $PtI_4$, l'iodure d'ammonium, l'iodure de tétraméthylammonium, l'iodure de tétraéthylammonium, l'iodure de tétrapropylammonium, NaSCN, $Mg(SCN)_2$, $Ca(SCN)_2$, $Al(SCN)_2$, le thiocyanate d'ammonium, le thiocyanate de guanidinium ou un mélange de ceux-ci ;
mélanger les ingrédients formant une céramique inorganique, le liant, le solvant et l'agent chaotropique pour former une charge de précurseur ;
façonner la charge de précurseur en un corps vert en nid d'abeilles ; et
cuire le corps vert en nid d'abeilles pour produire un corps céramique en nid d'abeilles.

**2.** Procédé selon la revendication 1 dans lequel l'agent chaotropique est l'iodure d'ammonium, l'iodure de tétraméthylammonium, l'iodure de tétraéthylammonium, l'iodure de tétrapropylammonium ou un mélange de ceux-ci.

**3.** Procédé selon la revendication 1 dans lequel la concentration de l'agent chaotropique est de 0,05 mol/kg à 1,5 mol/kg.

**4.** Procédé selon la revendication 1 dans lequel la quantité d'agent chaotropique se situe à la limite de solubilité de l'agent dans le solvant.

**5.** Procédé selon la revendication 1 dans lequel le liant à base de cellulose comprend de la méthylcellulose, de l'éthylhydroxyéthylcellulose, de l'hydroxybutylméthylcellulose, de l'hydroxyméthylcellulose, de l'hydroxypropylméthylcellulose, de l'hydroxyéthylméthylcellulose, de l'hydroxybutylméthylcellulose, de l'hydroxyéthylcellulose, de l'hydroxypropylcellulose, de la carboxyméthylcellulose sodique ou un mélange de celles-ci.

**6.** Procédé selon la revendication 1 dans lequel les ingrédients formant une céramique comprennent des ingrédients formant du titanate d'aluminium.

**7.** Procédé selon la revendication 1 dans lequel les ingrédients formant une céramique inorganique comprennent des ingrédients formant de la cordiérite.

**8.** Procédé selon la revendication 1 comprenant en outre l'étape consistant à ajouter jusqu'à 60 % en poids d'un matériau porogène aux matériaux formant une céramique inorganique, le % en poids étant basé sur 100 % des ingrédients formant une céramique inorganique.

**9.** Procédé selon la revendication 1 dans lequel le matériau porogène est l'amidon ou le graphite.

**10.** Procédé selon la revendication 1 dans lequel le corps vert en nid d'abeilles est formé par extrusion à travers une filière.

**11.** Composition de charge de précurseur de céramique, comprenant :

des ingrédients formant une céramique inorganique ;
un liant à base de cellulose ;
un solvant à base aqueuse ; et
un agent chaotropique, l'agent chaotropique étant NaI, KI, RbI, $MgI_2$, $ZnI_2$, $PtI_4$, l'iodure d'ammonium, l'iodure de tétraméthylammonium, l'iodure de tétraéthylammonium, l'iodure de tétrapropylammonium, NaSCN, Mg $(SCN)_2$, $Ca(SCN)_2$, $Al(SCN)_2$, le thiocyanate d'ammonium, le thiocyanate de guanidinium ou un mélange de ceux-ci.

**12.** Composition de charge de précurseur de céramique selon la revendication 11 comprenant en outre un matériau porogène, le matériau porogène étant l'amidon ou le graphite.

**13.** Composition de charge de précurseur de céramique selon la revendication 11 dans laquelle l'agent chaotropique a une molalité de 0,05 mol/kg à 1,5 mol/kg ou jusqu'à la limite de solubilité de l'agent dans le solvant.

**14.** Composition de charge de précurseur de céramique selon la revendication 11 dans laquelle les matériaux formant une céramique inorganique comprennent des ingrédients formant de la cordiérite ou du titanate d'aluminium.

**15.** Composition de charge de précurseur de céramique selon la revendication 11 dans laquelle le liant à base de cellulose comprend de la méthylcellulose, de l'éthylhydroxyéthylcellulose, de l'hydroxybutylméthylcellulose, de l'hydroxyméthylcellulose, de l'hydroxypropylméthylcellulose, de l'hydroxyéthylméthylcellulose, de l'hydroxybutylméthylcellulose, de l'hydroxyéthylcellulose, de l'hydroxypropylcellulose, de la carboxyméthylcellulose sodique ou un mélange de celles-ci.

FIG. 1

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4551295 A
- US 3885977 A